# EUROPÄISCHE PATENTSCHRIFT

(11) **EP 2 233 188 B1**
(45) Veröffentlichungstag und Bekanntmachung des Hinweises auf die Patenterteilung: **13.11.2013**
(21) Anmeldenummer: 10156376.5
(22) Anmeldetag: 12.03.2010
(51) Int. Cl.: B01D 35/16

(54) **Hohlschraube**
Hollow screw
Vis creuse

(30) Priorität: 26.03.2009 DE 102009015021
(43) Veröffentlichungstag der Anmeldung: 29.09.2010
(73) Patentinhaber: Mahle International GmbH, 70376 Stuttgart (DE)
(72) Erfinder: Deschamps, Gregory, 78180, Montigny-Le-BTX (FR); Lamotte, Johann, 95260, Beaumont sur Oise (FR); Ruffet, Valentin, 92500, Rueil Malmaison (FR)
(74) Vertreter: BRP Renaud & Partner

(56) Entgegenhaltungen:
- DE-A1- 2 445 454
- DE-U- 7 522 550
- DE-U- 7 522 551
- GB-A- 1 101 218
- GB-A- 2 171 770
- JP-A- 2000 274 222

## Beschreibung

Die vorliegende Erfindung betrifft eine Hohlschraube zum Einbau in eine Filtereinrichtung, insbesondere zum Einbau in eine Ölfiltereinrichtung. Die Erfindung betrifft außerdem eine Filtereinrichtung mit einer derartigen Hohlschraube.

Hohlschrauben werden insbesondere in modernen Filtereinrichtungen, bspw. in Ölfiltereinrichtungen, aber auch zum Anschluss von Kraftstoffleitungen, bspw. in einen Vergaser, verwendet, wobei diese üblicherweise einen gängigen Sechskantkopf besitzen, um darüber in eine entsprechend ausgestaltete Öffnung an der Filtereinrichtung eingeschraubt werden zu können. Ein derartiger Sechskantkopf stellt dabei jedoch eine eckige, das heißt kantige, Geometrie dar, welche nur vergleichsweise aufwendig und damit teuer zu fertigen ist.

Die vorliegende Erfindung beschäftigt sich mit dem Problem, eine verbesserte Ausführungsform einer Hohlschraube anzugeben, die insbesondere einfacher und damit kostengünstiger zu fertigen ist.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, eine an sich bekannte Hohlschraube mit ausschließlich runden Geometrien auszubilden, die sich bekanntermaßen einfacher und kostengünstiger fertigen lassen als eckige Geometrien, wobei die erfindungsgemäße Hohlschraube nach der Fertigung mit einer Mehrkantmutter verbunden wird, die die spätere Angriffsfläche zum Aufbringen eines Drehmoments, bildet. Die erfindungsgemäße Hohlschraube ist dabei zum Einbau in eine Filtereinrichtung, insbesondere zum Einbau in eine Ölfiltereinrichtung geeignet und weist zumindest zwei Radialöffnungen sowie eine Axialöffnung auf, über welche der hohle Innenraum der Hohlschraube mit einer Umgebung verbunden ist und dadurch einen Mediumfluss durch die Hohlschraube erlaubt. An ihrem, der Axialöffnung gegenüberliegenden Ende, weist die erfindungsgemäße Hohlschraube einen zylindrischen Axialfortsatz auf, auf welchem erfindungsgemäß die Mehrkantmutter drehfest aufgebracht wird. In soweit kann die erfindungsgemäße Hohlschraube prinzipiell in zwei Teile unterteilt werden, nämlich in einen Grundkörper mit ausschließlich runden Geometrien und die Mehrkantmutter, die in einem anschließenden Verfahrensschritt, dass heißt nach dem Fertigstellen des Grundkörpers, drehfest mit dem Axialfortsatz des Grundkörpers verbunden wird. Eine drehfeste Verbindung der Mehrkantmutter mit dem Axialfortsatz des Grundkörpers kann dabei auf unterschiedlichste Arten erfolgen, bspw. über ein Verstemmen, ein Verkleben oder ein Verschweißen. Denkbar ist selbstverständlich auch, dass die Mehrkantmutter ein selbst furchendes, das heißt selbst schneidendes, Gewinde aufweist, welches sich in eine Außenmantelfläche des Axialfortsatzes einschneidet und dadurch eine drehfeste Verbindung zwischen dem Grundkörper und der Mehrkantmutter ermöglicht. In gleicher Weise ist auch denkbar, dass an dem Axialfortsatz des Grundkörpers bereits ein Gewinde vorgesehen wird. Im Vergleich zu bisher bekannten Hohlschrauben, welche üblicherweise einteilig ausgebildet waren, bietet die zweiteilige Ausbildung den großen Vorteil, sowohl die Mehrkantmutter als auch den Grundkörper der Hohlschraube kostengünstig herzustellen, da insbesondere eckige, dass heißt kantige, Geometrien am Grundkörper vermieden werden.

Die Radialöffnungen der Hohlschraube sind im Bereich zwischen zwei Radialkragen angeordnet. Beim Einschrauben der Hohlschraube in eine zugehörige Einschrauböffnung an der Filtereinrichtung können dabei die beiden Radialkragen als Ringdichtungen dienen, in dem sie sich dichtend an einen Innenraum anlegen und dadurch den Bereich zwischen den beiden Radialkragen in Axialrichtung der Hohlschraube abdichten. Da auch die beiden Radialkragen ausschließlich als runde und einteilig mit der Hohlschraube hergestellte Geometrien ausgebildet sind, können diese in einem gemeinsamen Fertigungsschritt, dass heißt zusammen mit dem Grundkörper der Hohlschraube, kostengünstig gefertigt werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1 a-c: einzelne Verfahrensschritte zur Montage einer Mehrkantmutter an einem Grundkörper einer erfindungsgemäßen Hohlschraube,
- Fig. 2: eine Schnittdarstellung durch die gemäß der Fig. 1c gezeigte Hohlschraube.

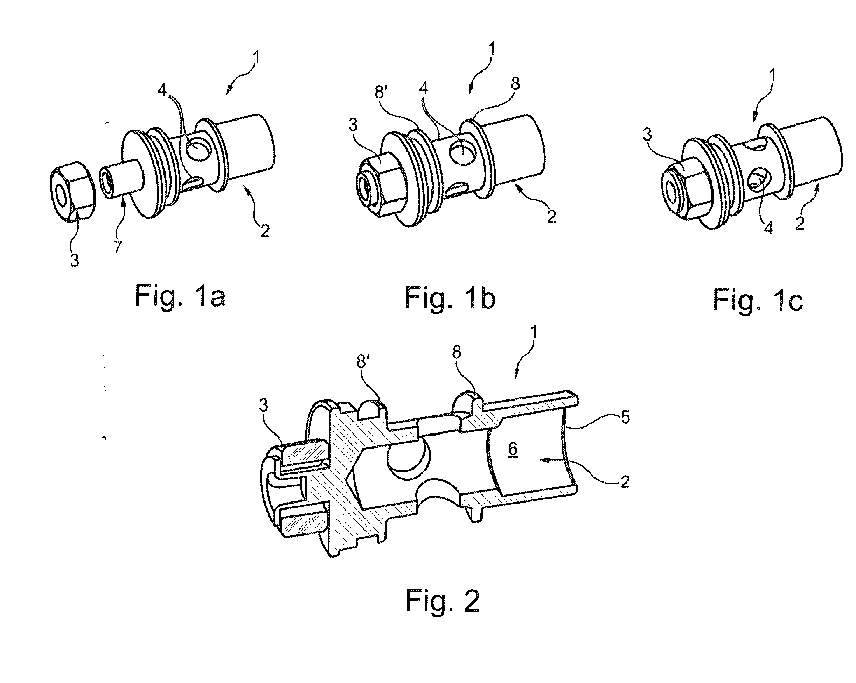

Entsprechend der Fig. 1 und 2, weist eine erfindungsgemäße Hohlschraube 1, welche bisher einteilig aus einem Vollprofil hergestellt wurde, einen zweiteiligen Aufbau auf, nämlich einen Grundkörper 2 sowie eine Mehrkantmutter 3, die in der gezeigten Ausführungsform als Sechskantmutter ausgebildet ist. Die Hohlschraube 1 wird dabei üblicherweise zum Einbau in eine Filtereinrichtung, insbesondere als Ablassschraube in einer Ölfiltereinrichtung, verwendet, kann aber bspw. auch anderenorts, insbesondere in einem Verbindungsbereich einer Kraftstoffleitung mit einem Vergaser, eingesetzt werden.

Der Grundkörper 2 weist zumindest zwei Radialöffnungen 4 und 4' sowie eine Axialöffnung 5 auf, über welche ein hohler Innenraum 6 (vgl. Fig. 2) mit einer außenliegenden Umgebung verbunden ist. Gegenüber der Axialöffnung 5 weist der Grundkörper 2 einen zylindrischen Axialfortsatz 7 (vgl. insbesondere Fig. 1a) auf, auf welchem nach Fertigstellung des Grundkörpers 2 die Mehrkantmutter 3 drehfest angeordnet wird. Die Mehrkantmutter 3 dient dabei zur Bereitstellung einer Angriffsfläche, über welche ein Drehmoment auf die Hohlschraube 1 ausgeübt werden kann. Wie den Fig. 1 und 2 dabei zu entnehmen ist, weist der erfindungsgemäße Grundkörper 2 der Hohlschraube 1 ausschließlich runde Geometrien auf, die sich im Vergleich zu eckigen und kantigen Geometrien, wie diese bei der bisherigen und aus dem Stand der Technik bekannten einteiligen Hohlschraube auftragen, deutlich einfacher und kostengünstiger zu fertigen sind.

Der Grundkörper 2 der erfindungsgemäßen Hohlschraube 1 kann dabei bspw. aus Metall, insbesondere als gedrehtes Metallteil, oder aus Kunststoff, insbesondere als Kunststoffspritzgussteil, ausgebildet sein. Zur drehfesten Befestigung der Mehrkantmutter 3 mit dem Grundkörper 2 kann diese bspw. mit dem Axialfortsatz 7 verstemmt, verklebt oder verschweißt werden. Gemäß den Fig. 1a bis 1c ist dabei ein Montageverfahren der Mehrkantmutter 3 am Axialfortsatz 7 gezeigt, bei welchem die Mehrkantmutter 3 durch ein Verstemmen drehfest mit dem Grundkörper 2 der Hohlschraube 1 verbunden wird. Zunächst wird dabei die Mehrkantmutter 3 auf den Axialfortsatz 7 aufgeschoben (vgl. Fig. 1 b), wobei anschließend der Axialfortsatz 7 durch ein entsprechendes Stemmwerkzeug nach radial außen aufgebogen und dadurch die Mehrkantmutter 3 drehfest mit dem Grundkörper 2 verklemmt wird.

Alternativ hierzu ist auch denkbar, dass die Mehrkantmutter 3, welche bspw. aus Metall ausgebildet ist, ein selbst furchendes, das heißt ein selbst schneidendes, Innengewinde aufweist, welches sich auf den gewindelosen Axialfortsatz 7 aufschneidet. Alternativ hierzu ist auch denkbar, dass nicht nur an der Mehrkantmutter 3, sondern zusätzlich auch am Axialfortsatz 7 ein Gewinde angeordnet ist, so dass eine Verschraubung der beiden Komponenten miteinander erfolgen kann. Denkbar ist selbstverständlich auch, dass die Mehrkantmutter 3 mit einer Kombination der bisher genannten Verbindungsverfahren drehfest mit dem Axialfortsatz 7 des Grundkörpers 2 verbunden wird.

Betrachtet man insbesondere die Fig. 2, so kann man erkennen, dass die Radialöffnungen 4 in einem Bereich zwischen zwei axial dazu benachbart angeordneten Radialkragen 8 und 8' angeordnet sind. Dieser Radialkragen 8 und 8' bilden dabei eine Dichtung, so dass der Bereich der Radialöffnungen 4 in Axialrichtung der Hohlschraube 1 nach einem Einschrauben in eine zugehörige Öffnung an einer Filtereinrichtung abgedichtet ist.

Mit der erfindungsgemäßen zweiteiligen Ausbildung der Hohlschraube 1, kann diese im Vergleich zu bisher ausgebildeten einteiligen Hohlschrauben deutlich kostengünstiger und fertigungstechnisch einfacher hergestellt werden.

## Patentansprüche

1. Hohlschraube (1) zum Einbau in eine Filtereinrichtung, insbesondere in eine Ölfiltereinrichtung, mit einem Grundkörper (2),
- der zumindest zwei Radialöffnungen (4) und einer Axialöffnung (5) aufweist, über welche ein hohler Innenraum (6) mit einer Umgebung verbunden ist,
- an welchem der Axialöffnung (5) gegenüberliegend ein zylindrischer Axialfortsatz (7) angeordnet ist,
- der ausschließlich runde Geometrien aufweist,
wobei eine drehfest auf dem Axialfortsatz (7) angeordnete Mehrkantmutter (3) als Angriffsfläche zum Aufbringen eines Drehmomentes vorgesehen ist,
**dadurch gekennzeichnet,**
- **dass** die Radialöffnungen (4) in einem Bereich zwischen zwei Radialkragen (8,8') angeordnet sind, die eine Dichtung bilden,
- **dass** die Radialkragen (8,8') als runde und einteilig mit dem Grundkörper (2) der Hohlschraube (1) hergestellte Geometrien ausgebildet sind.

2. Hohlschraube nach Anspruch 1,
**dadurch gekennzeichnet,**
**dass** der Grundkörper (2) aus Metall, insbesondere als gedrehtes Metallteil, oder aus Kunststoff, insbesondere als Kunststoffspritzgussteil ausgebildet ist.

3. Hohlschraube nach Anspruch 1 oder 2,
**dadurch gekennzeichnet,**
**dass** die Mehrkantmutter (3) auf dem Axialfortsatz (7) verstemmt, verklebt oder verschweißt ist.

4. Hohlschraube nach einem der Ansprüche 1 bis 3.
**dadurch gekennzeichnet,**
**dass** die Mehrkantmutter (3) als selbstfurchende Mutter ausgebildet ist.

5. Hohlschraube nach einem der Ansprüche 1 bis 4,
**dadurch gekennzeichnet,**
**dass** der Grundkörper (2) an seinem Axialfortsatz (7) ein Gewinde aufweist.

6. Filtereinrichtung, insbesondere in eine Ölfiltereinrichtung, mit einer Hohlschraube (1) nach einem der Ansprüche 1 bis 5.

## Claims

1. A hollow screw (1) for mounting in a filter device, in particular in an oil filter device, with a base body (2)
- which has at least two radial openings (4) and one axial opening (5) through which a hollow inner space (6) is connected with an environment,
- on which a cylindrical axial extension (7) is arranged opposite to the axial opening (5),
- which has solely round geometries,
wherein a polygonal nut (3) arranged in a non-rotatable manner on the axial extension (7) is provided as contact surface for applying a torque, **characterized in**
- **that** the radial openings (4) are arranged in a region between two radial collars (8, 8'), forming a sealing,
- **that** the two radial collars (8,8') are formed as solely round geometries and manufactured as one piece with the hollow screw (1).

2. The hollow screw according to claim 1,
**characterized in**
**that** the base body (2) is formed from a metal, in particular as a turned metal part, or from plastic, in particular as a plastic injection molding part.

3. The hollow screw according to claim 1 or claim 2,
**characterized in**
**that** the polygonal nut (3) is caulked, glued, or welded on the axial extension (7).

4. The hollow screw according to any one of the claims 1 to 3, **characterized in**
**that** the polygonal nut (3) is formed as a self-grooving nut.

5. The hollow screw according to any one of the claims 1 to 4, **characterized in**
**that** the base body (2) has a thread on its axial extension (7).

6. A filter device, in particular in an oil filter device, with a hollow screw (1) according to any one of the claims 1 to 5.

## Revendications

1. Vis creuse (1) à monter dans un dispositif de filtre, notamment dans un dispositif à filtre à huile, comportant un corps de base (2),
- qui présente au moins deux ouvertures radiales (4) et une ouverture axiale (5), par l'intermédiaire desquelles un espace intérieur creux (6) est relié à un environnement ambiant,
- sur lequel un prolongement axiale (7) cylindrique est disposé en vis-à-vis de l'ouverture axiale (5),
- qui présente exclusivement des géométries rondes,
- dans laquelle un écrou polygonal (3) disposé de manière solidaire en rotation sur le prolongement axial (7) est prévu comme surface d'attaque pour appliquer n couple de rotation,
**caractérisée en ce que**
- les ouvertures radiales (4) sont disposées dans une zone entre deux collets radiaux (8,8'), qui forment un joint d'étanchéité,
- les collets radiaux (8,8') sont conçus comme des géométries rondes et produites en un seul tenant avec le corps de base (2) de la vis creuse (1).

2. Vis creuse selon la revendication 1, **caractérisée en ce que** le corps de base (2) est conçu en métal, notamment comme une pièce métallique tournée, ou en plastique, notamment comme une pièce moulée par injection en plastique.

3. Vis creuse selon les revendications 1 ou 2, **caractérisée en ce que** l'écrou polygonal (3) est maté, collé ou soudé sur le prolongement axial (7).

4. Vis creuse selon une des revendications 1 à 3, **caractérisée en ce que** l'écrou polygonal (3) est conçu comme un écrou auto-taraudeur.

5. Vis creuse selon une des revendications 1 à 4, **caractérisée en ce que** le corps de base (2) présente un filetage sur son prolongement axial (7).

6. Dispositif de filtre, notamment dans un dispositif de filtre à huile, comportant une vis creuse (1) selon une des revendications 1 à 5.
